# EUROPEAN PATENT SPECIFICATION

(11) **EP 2 186 846 B1**
(45) Date of publication and mention of the grant of the patent: **04.01.2012**
(21) Application number: 09176224.5
(22) Date of filing: 17.11.2009
(51) Int. Cl.: C08J 5/06, C08J 5/04

(54) **Natural Fiber-Reinforced Polylactic Acid Resin Composition and Molded Product Made Using the Same**
Naturfaserverstärkte Polylaktosesäure-Harzzusammensetzung und geformtes Produkt daraus
Composition de résine d'acide polylactique renforcée par des fibres naturelles et produit moulé fabriqué en l'utilisant

(30) Priority: 17.11.2008 KR 20080114242; 13.11.2009 KR 20090109968
(43) Date of publication of application: 19.05.2010
(73) Proprietor: CHEIL INDUSTRIES INC., Kumi-city, Kyungsangbuk-do (KR)
(72) Inventor: Chung, Young-Mi, Gyeonggi-do (KR); Jung, Chang-Do, Gyeonggi-do (KR); Ha, Doo-Han, Gyeonggi-do (KR)
(74) Representative: Bublak, Wolfgang

(56) References cited:
- EP-A1- 1 780 234
- CN-A- 101 003 667
- CN-A- 101 260 228

## Description

The present invention relates to a natural fiber-reinforced polylactic acid resin composition and a molded product made using the same.

There has been much research on the development of strong and safe polymer materials for specific purposes. However, discarded polymers are increasingly socially recognized as a severe environmental problem all over the world, leading to efforts to develop environmentally-friendly polymer materials.

Environmentally friendly polymers may be primarily classified into photodegradable and biodegradable polymers. Biodegradable polymers typically include a functional group that can be decomposed by microorganisms.

Among these polymers, aliphatic polyester polymer has gained the most attention, since it has excellent workability and easily adjustable decomposition characteristics. In particular, polylactic acid (PLA) has a world-wide market share of about 70,000 tons and expansively covers the field where conventional plastic is commonly used, for example in food packing materials and containers, cases for electronics, and the like.

Currently, polylactic acid resin is mainly used for disposable products such as food containers, wraps, films, and the like due to its biodegradable characteristics. An example of polylactic acid resin is manufactured by American NatureWorks LLC.

However, since a conventional polylactic acid resin lacks formability, mechanical strength, and heat resistance, a thin film made therefrom can be easily destroyed. Since it has low resistance against high temperatures, a molded product made therefrom can be distorted at 60°C or higher. Polylactic acid may be decomposed in 48 hours at high temperature under a high humidity due to its low hydrolysis resistance.

When L-polylactic acid and D-polylactic acid are melt-mixed, heat resistance and mechanical strength may be significantly improved due to increased crystallinity as compared to the use of L-polylactic acid or D-polylactic acid alone.

Such a melted mixture of L-polylactic acid and D-polylactic acid is called a stereocomplex. The property improvement using stereocomplexes is disclosed in nonpatent documents such as Macromolecules 20, 904 1987, Macromolecules 28, 5230 1995, and Macromolecules 26, 6918 1993, and patent documents such as Japanese Patent Laid-Open Publication No. 2005-187630, Japanese Patent Laid-Open Publication No. 2003-096285, Japanese Patent Laid-Open Publication No. 2000-017163, Japanese Patent Laid-Open Publication No. 2007-045915, Japanese Patent Laid-Open Publication No. 2006-265486, and Japanese Patent Laid-Open Publication No. 2006-045428. Japanese Patent Laid-Open Publication No. 2006-265486 discloses a stereocomplex and a glass fiber, and Japanese Patent Laid-Open Publication No. 2006-045428 discloses a stereocomplex and a natural fiber.

However, the stereocomplex compositions do not have sufficient performance, and although the glass fiber-reinforced stereocomplex disclosed in Japanese Patent Laid-Open Publication No. 2006-265486 can exhibit improved strength, it can also exhibit decreased biomass.

The natural fiber-reinforced stereocomplex disclosed in Japanese Patent Laid-Open Publication No. 2006-045428 does not provide sufficient performance due to insufficient adherence between the natural fiber and polylactic acid. In the method used to make the natural fiber-reinforced stereocomplex, the polylactic acid and natural fiber are simply kneaded (mixed), and mechanical strength is not substantially improved due to defects of the natural fiber and poor adhesion at the interface between the natural fiber and polylactic acid resin.

Chinese patent document CN 101 260 228 A refers to a preparation method of natural fiber/polylactid acid composite material with fire-retarding performance. The preparation method comprises the steps of surface modification and the fire-retarding modification of natural fiber, and combination of the modified natural fiber with polylactic acid and fire retardant.

Chinese patent document CN 101 003 667 A refers to a poly(lactic acid)/natural fiber composite, which is mainly composed of poly(lactic acid) resin and natural fibers. The production method comprises performing surface treatment on natural fibers with coupling agent, mixing with poly(lactic acid) resin, antioxidant, nucleating agent and lubricant, melt-extruding, and granulating to obtain the product.

It is the object of the present invention to provide a natural fiber-reinforced polylactic acid resin composition having an excellent balance of properties such as hydrolysis resistance, mechanical strength, and heat resistance.

Furthermore, the present invention provides a molded product made using the Natural fiber-reinforced polylactic acid resin composition.

This object has been achieved by the provision of a natural fiber-reinforced polylactic acid resin composition is provided that includes (A) about 50 to about 95 wt% of a first polylactic acid resin; and (B) about 5 to about 50 wt% of a natural fiber that is surface-treated with a second polylactic acid resin. The second polylactic acid resin includes a different isomer from the first polylactic acid resin.

According to another aspect of the present invention, a natural fiber-reinforced polylactic acid resin composition is provided that includes (A) about 50 to about 95 wt% of a first polylactic acid resin; and (B) about 5 to about 50 wt% of a natural fiber that is surface-treated with a second polylactic acid resin. When measured under isothermal conditions after quenching from about 240°C to a crystallization temperature, a spherulite crystal is first formed at a surface of the natural fiber and the growth rate at the surface of the natural fiber is faster than at other positions in the composition.

The crystallization temperature can range from about 100 to about 180°C. In exemplary embodiments, the sphemlite crystal may be a stereocomplex spherulite crystal, and the crystallization temperature can range from about 140 to about 180°C.

The first polylactic acid resin and the second polylactic acid resin independently comprise an L-polylactic acid (PLLA) resin, a D-polylactic acid (PDLA) resin, an L,D-polylactic acid resin, or a combination thereof.

The natural fiber that is surface-treated with the second polylactic acid resin can be obtained by in-situ synthesis of the second polylactic acid resin on the surface of the natural fiber, melt-mixing of the second polylactic acid resin and the natural fiber using a batch-type mixer, or dipping the natural fiber in the second polylactic acid resin using a continuous dipping apparatus.

The natural fiber surface-treated with the second polylactic acid resin (B) may include the second polylactic acid resin and the natural fiber at a weight ratio of about 1:0.1 to about 1:10.

The natural fiber can include a bast fiber, and can include about 70 wt% or more of cellulose. The natural fiber can have an average length of about 0.01 to about 100 mm and an average diameter of about 0.001 to about 50 µm.

The natural fiber-reinforced polylactic acid resin composition may further include about 0.01 to about 30 parts by weight of an impact-reinforcing agent based about 100 parts by weight of the natural fiber-reinforced polylactic acid resin composition. The impact-reinforcing agent may include a reactive olefin-based copolymer that is obtained by grafting a reactive group comprising maleic anhydride, glycidyl methacrylate, oxazoline, or a combination thereof onto an olefin-based rubber; a core-shell copolymer that is obtained by grafting an unsaturated compound onto a rubber polymer; or a combination thereof.

The natural fiber-reinforced polylactic acid resin composition may further include a thermoplastic resin such as a polycarbonate resin, a polyolefin-based resin, a polyester-based resin, a nylon-based resin, a rubber modified vinyl-based graft copolymer resin, polyacetal, polymethylmethacrylate, or a combination thereof.

According to another aspect of the present invention, a molded product made using the natural fiber-reinforced polylactic acid resin composition is provided.

Hereinafter, further aspects of this disclosure will be described in detail.

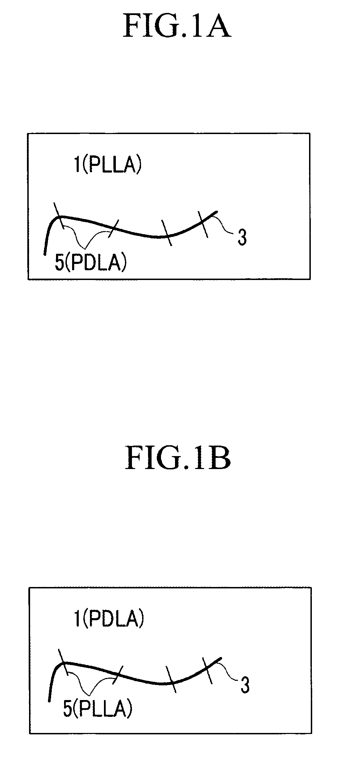

FIGS. 1A to 1G are schematic views showing natural fiber-reinforced polylactic acid resin compositions according to various embodiments of the invention.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

As used herein, unless another specific definition is provided, the term "(meth)acrylate" refers to "acrylate" or "methacrylate", and the term "(meth)acrylic acid" refers to "acrylic acid" or "methacrylic acid". The term "(meth)acrylic acid alkyl ester" refers to "acrylic acid alkyl ester" and "methacrylic acid alkyl ester", and the term "(meth)acrylic acid ester" refers to "acrylic acid ester" and "methacrylic acid ester".

As used herein, unless another specific definition is provided, the term "including a different isomer" means that one of a first polylactic acid resin and a second polylactic acid resin includes a repeating unit derived from L-lactic acid, and the other includes a repeating unit derived from D-lactic acid.

The natural fiber-reinforced polylactic acid resin composition according to one embodiment includes (A) a first polylactic acid resin and (B) a natural fiber surface-treated with a second polylactic acid resin.

Exemplary components included in the natural fiber-reinforced polylactic acid resin composition according to various embodiments will hereinafter be described in detail. However, these embodiments are only exemplary, and this disclosure is not limited thereto.

### (1) First and second polylactic acid resins

In general, polylactic acid resin is a commercially-available polyester-based resin made using lactic acid obtained by decomposing corn starch of biomass energy as a monomer.

The first polylactic acid resin and the second polylactic acid resin may each independently include an L-polylactic acid (PLLA) resin, a D-polylactic acid (PDLA) resin, an L,D-polylactic acid resin, or a combination thereof.

The L-polylactic acid (PLLA) resin may include about 95 wt% or more of a repeating unit derived from L-lactic acid and about 5 wt% or less of a repeating unit derived from D-lactic acid. In one embodiment, the L-polylactic acid may include about 98 to about 99.99 wt% of the repeating unit derived from L-lactic acid and about 0.01 to about 2 wt% of the repeating unit derived from D-lactic acid. The D-polylactic acid (PDLA) resin may include about 95 wt% or more of a repeating unit derived from D-lactic acid and about 5 wt% or less of a repeating unit derived from L-lactic acid. In one embodiment, the D-polylactic acid may include about 98 to about 99.99 wt% of the repeating unit derived from D-lactic acid and about 0.01 to about 2 wt% of the repeating unit derived from L-lactic acid. When the L-polylactic acid resin and the D-polylactic acid resin include about 95 wt% or more of the repeating unit derived from L-lactic acid and about 95 wt% or more of the repeating unit derived from D-lactic acid, respectively, it may have an excellent balance of properties such as heat resistance, formability, and hydrolysis resistance.

The first polylactic acid resin and the second polylactic acid resin may include the same isomers or different isomers from each other. A natural fiber-reinforced polylactic acid resin composition including a first polylactic acid resin and a natural fiber that is surface-treated with a second polylactic acid resin may have diverse combinations of compositions, and some combinations are shown in FIGS. 1A to 1G.

FIGS. 1A to 1G are schematic views showing natural fiber-reinforced polylactic acid resin composition according to various embodiments of the invention.

As shown in FIGS. 1A to 1G, a matrix corresponds to the first polylactic acid resin 1 according to one embodiment, and some lines marked on the surface of a natural fiber 3 correspond to the second polylactic acid resin 5.

Referring to FIGS. 1A and 1B, the first polylactic acid resin 1 and the second polylactic acid resin 5 are PLLA and PDLA, and PDLA and PLLA, respectively, and they are different isomers from each other.

When the second polylactic acid resin and the first polylactic acid resin are different isomers, the first polylactic acid resin and the second polylactic acid resin may form a stereocomplex by melt-mixing. The stereocomplex can improve properties such as heat resistance, mechanical strength and the like, due to improved crystallinity compared to a single PLA resin used alone.

In one embodiment, L-polylactic acid resin may be used as the first polylactic acid resin and D-polylactic acid resin may be used as the second polylactic acid resin for surface-treatment of a natural fiber, respectively. D-polylactic acid resin thin film on the surface of the natural fiber may induce formation of a stereocomplex, which can significantly improve properties.

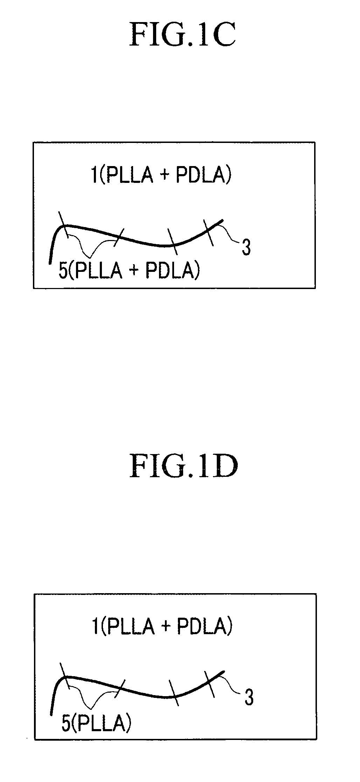

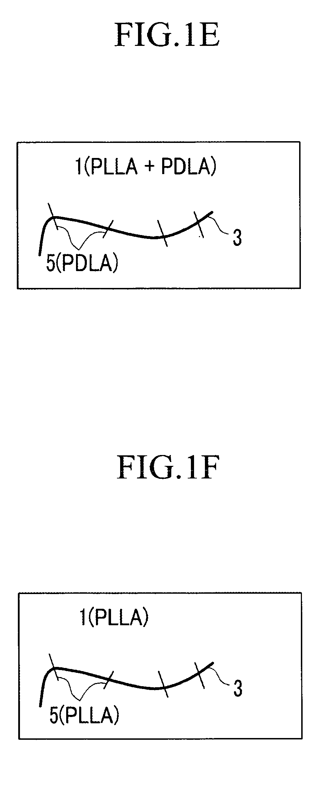

In FIG. 1C, the first polylactic acid resin 1 is PLLA and PDLA, and the second polylactic acid resin 5 is PLLA and PDLA. In FIG 1D, the first polylactic acid resin 1 is PLLA and PDLA, and the second polylactic acid resin 5 is PLLA, and in FIG. 1E, the first polylactic acid resin 1 is PLLA and PDLA, and the second polylactic acid resin 5 is PDLA.

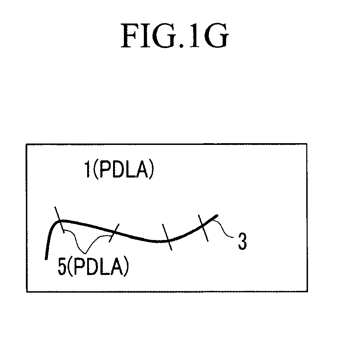

In the above cases, the second polylactic acid resin and the first polylactic acid resin can include different isomers, and therefore, the first polylactic acid resin and the second polylactic acid resin may form a stereocomplex by melt-mixing. Referring to FIGS. 1F and 1G, the first polylactic acid resin 1 and the second polylactic acid resin 5 are PLLA and PLLA, and PDLA and PDLA, respectively that are the same isomers.

In one embodiment, a natural fiber surface-treated with an L-polylactic acid resin and L-polylactic acid resin may be mixed, and a natural fiber surface-treated with D-polylactic acid resin and a D-polylactic acid resin may be mixed.

PLLA and PDLA may include about 5 wt% or less of the repeating unit derived from D-lactic acid and about 5 wt% or less of the repeating unit derived from L-lactic acid, respectively. Even though they are the same isomers like PLLA and PLLA, and PDLA and PDLA, the resin may still form a stereocomplex.

A natural fiber that is surface-treated with an L-polylactic acid resin or a D-polylactic acid resin may have improved adherence between the natural fiber and a polylactic acid resin compared to a simple mixture of L-polylactic acid resin or D-polylactic acid resin and a natural fiber. Therefore, properties such as heat resistance, mechanical strength, and the like can be improved.

There is no particular limitation with respect to the molecular weight or molecular weight distribution of the polylactic acid resin, as long as the polylactic acid resin can be molded. In one embodiment, the polylactic acid resin can have a weight average molecular weight of more than about 50,000 g/mol, for example, about 90,000 to about 500,000 g/mol. When the polylactic acid resin has a weight average molecular weight within the above range, a natural fiber-reinforced polylactic acid resin composition with balanced mechanical strength and heat resistance may be provided.

In one embodiment, the natural fiber-reinforced polylactic acid resin composition can include the first polylactic acid resin (A) in an amount of about 50 to about 95 wt%, based on the total amount of the natural fiber-reinforced polylactic acid resin composition. In another embodiment, the natural fiber-reinforced polylactic acid resin composition can include the first polylactic acid resin (A) in an amount of about 60 to about 90 wt%, based on the total amount of the natural fiber-reinforced polylactic acid resin composition. When the first polylactic acid resin (A) is included within the above range, excellent heat resistance and mechanical strength may be obtained and environmentally-friendly effects can be improved.

### (2) Natural fiber

The natural fiber according to one embodiment is included in the polylactic acid resin composition as a reinforcing agent and can include a bast fiber obtained from bast having flexibility among bast and xylem of a stem.

The bast fiber can be useful as a polymer composite material and can include flax, hemp, jute, kenaf, ramie, curaua, and the like, and combinations thereof.

The natural fiber may include cellulose in an amount of about 70 wt% or more, and in one embodiment, about 95 wt% or more. Generally, the cell membrane of a fiber cell is mainly composed of cellulose, lignin, and semicellulose. When the natural fiber includes cellulose in an amount of about 95 wt% or more by sufficiently removing lignin and semicellulose, the heat resistance and the mechanical strength can be improved, and discoloration of a molded product caused by heat-decomposing lignin during a molding process can also be reduced.

The natural fiber may have an average length of about 0.01 to about 100 mm, for example, an average length of about 0.1 to about 10 mm. When the natural fiber has an average length within these ranges, the mechanical strength such as tensile strength, flexural strength, flexural modulus, and the like can be improved, and the natural fiber may have excellent workability and appearance characteristics.

The natural fiber can have an average diameter of about 0.001 to about 50 µm, for example, about 0.01 to about 20 µm. When the natural fiber has an average diameter within these ranges, workability and surface gloss can be improved.

It can be difficult to add a large amount of the natural fiber because the natural fiber is difficult to feed during extruding. In order to overcome this problem, a master batch may be prepared by mixing a natural fiber with a polymer in a batch-type mixer or compression molding. However, it can be difficult to improve adhesion between the natural fiber and the resin because the natural fiber has defects of porosity.

In one embodiment, the natural fiber may be subjected to surface treatment with the second polylactic acid resin in order to overcome the defects of the natural fiber itself. Surface strength of the natural fiber can be maximized by forming a stereocomplex between the second polylactic acid resin that exists on the surface of the natural fiber and the first polylactic acid resin having a different isomer, or mixing the second polylactic acid resin that exists on the surface of the natural fiber with a first polylactic acid resin having the same isomer.

The surface-treatment may be performed using one of the following three methods.

First, for example, as shown in the reaction scheme 1, in-situ synthesis of a D,D-lactide monomer can be performed using a -OH group on the surface of the natural fiber as an initiator to improve wetting between the polylactic acid resin and the natural fiber.

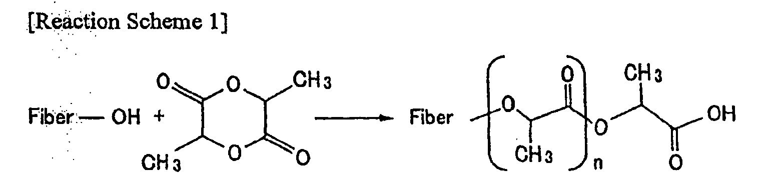

In the Reaction Scheme 1, n denotes the degree of polymerization.

Second, melt-mixing of the second polylactic acid resin and the natural fiber can be performed using a batch-type mixer.

Third, the natural fiber can be dipped in the second polylactic acid resin using a continuous dipping apparatus. This can be performed by dipping a natural fiber roving having a continuous phase and that is preheated using the continuous dipping apparatus into a dipping bath including the melted second polylactic acid resin to thereby soak the second polylactic acid resin into each of the natural fibers inside the roving, and then cooling the resin dipped natural fiber roving.

The first method is a method using a chemical dipping process. When a stereocomplex is formed, adhensive strength between the polylactic acid resin and the natural fiber can be improved because a stereocomplex is formed on the surface of the natural fiber, and therefore it may have excellent properties such as heat resistance, mechanical strength, impact strength, and the like, compared to the second and third methods using a physical dipping process.

The second and third methods are methods using a physical dipping process. Equivalent crystallinity (X_{c}) and stereocomplex ratio (R_{sc/L}) to those of the first method may be obtained, but the second polylactic acid resin may be separated easily from the natural fiber during the compounding process. Therefore, various properties (such as heat resistance, mechanical strength, impact strength, and the like) of the treated natural fiber may not be improved as much as with the first method, due to relatively weaker adhesive strength between the polylactic acid resin and the natural fiber.

In addition, the third method of a continuous dipping process may improve properties of the treated natural fiber more than the second method of a batch-type dipping process because the natural fibers may be dispersed more effectively in a resin.

The natural fiber surface-treated with the second polylactic acid resin (B) may include the second polylactic acid resin and the natural fiber in a weight ratio of about 1:0.1 to about 1:10, and in one embodiment, about 1:1. When the second polylactic acid resin and natural fiber are used within the above weight ratio ranges, the first and second polylactic acid resins can effectively crystallize, and the second polylactic acid can be effectively dispersed into the first polylactic acid resin.

The natural fiber-reinforced polylactic acid resin composition can include the natural fiber surface-treated with the second polylactic acid resin (B) in an amount of about 5 to about 50 wt%, for example about 10 to about 40 wt%, based on the total amount of the natural fiber-reinforced polylactic acid resin composition. When the natural fiber-reinforced polylactic acid resin composition includes the natural fiber surface-treated with the second polylactic acid resin in an amount within the above ranges, it may have excellent mechanical strength and workability.

### (3) Impact-reinforcing agent

According to one embodiment, the natural fiber-reinforced polylactic acid resin composition may further include an impact-reinforcing agent to reinforce impact strength and viscosity improvement.

The impact-reinforcing agent can have excellent affinity for polylactic acid resin, and may be a reactive olefin-based copolymer, a core-shell copolymer, or a combination thereof.

The reactive olefin-based copolymer may be a copolymer including about 0.1 to about 5 wt% of a reactive group comprising maleic anhydride, glycidyl methacrylate, oxazoline, or a combination thereof grafted into an olefin-based rubber such as an ethylene/propylene rubber, an isoprene rubber, an ethylene/octene rubber, or a terpolymer of ethylene-propylene-diene (EDPM).

Methods of grafting a reactive group onto a olefin-based copolymer are known and may be performed by a person of ordinary skill in the art without undue experimentation.

The core-shell copolymer has a core-shall structure obtained from graftpolymerization of at least an unsaturated compound comprising an acryl-based monomer, an aromatic vinyl monomer, an unsaturated nitrile monomer, a polymer form of at least one of the monomers, or a combination thereof into a rubber polymer that is obtained from polymerization of a monomer comprising a diene-based monomer, an acryl-based monomer, a silicon-based monomer, or a combination thereof.

Examples of the diene-based monomer include without limitation C4 to C6 butadiene, isoprene, and the like, and combinations thereof. In one embodiment, it may include butadiene. Examples of the rubber polymer that can be obtained from polymerization of the diene-based monomer include without limitation a butadiene rubber, an acryl rubber, a styrene/butadiene rubber, an acrylonitrile/butadiene rubber, an isoprene rubber, a terpolymer (EPDM) of ethylene-propylene-diene, and the like, and combinations thereof.

Examples of the acryl-based monomer includes without limitation methyl(meth)acrylate, ethyl(meth)acrylate, n-propyl(meth)acrylate, n-butyl(meth)acrylate, 2-ethylhexyl(meth)acrylate, hexyl(meth)acrylate, and the like, and combinations thereof. Curing agents such as ethylene glycol di(meth)acrylate, propylene glycol di(meth)acrylate, 1,3-butylene glycol di(meth)acrylate, 1,4-butylene glycol di(meth)acrylate, allyl(meth)acrylate, triallylcyanurate, and the like, and combinations thereof may be used along with the acryl-based monomer.

Examples of the silicon-based monomer include without limitation a cyclosiloxane compound comprising hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like, and combinations thereof. Curing agents such as trimethoxymethylsilane, triethoxyphenylsilane, tetramethoxysilane, tetraethoxysilane, and the like, and combinations thereof may be used along with the silicon-based monomer.

The rubber polymer can have an average particle diameter ranging from about 0.4 to about 1 µm, which can provide a good balance of impact resistance and coloring properties.

The rubber polymer may be included in an amount of about 30 to about 90 wt% based on the total weight of the impact-reinforcing agent. The impact-reinforcing agent including the rubber polymer in this amount can have excellent compatibility with the polylactic resin and can therefore provide excellent impact-reinforcing effects.

Examples of the acryl-based monomer of the unsaturated compound may include without limitation (meth)acrylic acid alkyl esters, (meth)acrylic acid esters, and the like, and combinations thereof.

The alkyl of the (meth)acrylic acid alkyl esters may be a C1 to C10 alkyl. Examples of the (meth)acrylic acid alkyl ester can include without limitation methyl(meth)acrylate, ethyl(meth)acrylate, propyl(meth)acrylate, butyl(meth)acrylate, and the like, and combinations thereof. In one embodiment, the (meth)acrylic acid alkyl ester can include methyl(meth)acrylate.

Examples of the aromatic vinyl monomer of the unsaturated compound may include without limitation styrene, C1-C10 alkyl-substituted styrene, halogen-substituted styrene, and the like, and combinations thereof. Examples of the alkyl substituted styrene include without limitation o-ethyl styrene, m-ethyl styrene, p-ethyl styrene, alpha-methyl styrene, and the like, and combinations thereof.

Examples of the unsaturated nitrile monomer of the unsaturated compound may include without limitation acrylonitrile, methacrylonitrile, ethacrylonitrile, and the like, and combinations thereof.

Methods of preparing the core-shell copolymer are known and may be performed by a person of ordinary skill in the art without undue experimentation.

The natural fiber-reinforced polylactic acid resin composition may include the impact-reinforcing agent in an amount of about 0.01 to about 30 parts by weight, for example about 1 to about 10 parts by weight, based on about 100 parts by weight of the natural fiber-reinforced polylactic acid resin composition. When the natural fiber-reinforced polylactic acid resin composition includes the impact-reinforcing agent in an amount within the above ranges, the composition may exhibit an impact reinforcing effect, and mechanical strength such as tensile strength, flexural strength, flexural modulus, and the like may also be improved.

### (4) Other additives

The natural fiber reinforced polylactic acid resin composition according to one embodiment may further include one or more additive(s).

Examples of additives include without limitation anti-hydrolysis agents, flame retardants, flame-retardant aids, organic or inorganic reinforcing agents, antibacterial agents, heat stabilizers, antioxidants, release agents, light stabilizers, compatibilizers, inorganic material additives, surfactants, coupling agents, plasticizers, admixtures, stabilizers, lubricants, antistatic agents, flame proofing agents, weather-resistance agents, colorants, ultraviolet (UV) blocking agents, filler, nucleating agents, adhesion aids, adhesives, and the like, and combinations thereof.

Examples of the antioxidants may include without limitation phenol-type antioxidants, phosphite-type antioxidants, thioether-type antioxidants, amine-type antioxidants, and the like, and combinations thereof. Examples of the releasing agents may include without limitation fluorine-containing polymers, silicone oils, metal salts of stearic acid, metal salts of montanic acid, montanic acid ester waxes, polyethylene waxes, and the like, and combinations thereof. Examples of the weather-resistance agents may include without limitation benzophenone-type weather-resistance agents, amine-type weather-resistance agents, and the like, and combinations thereof. Examples of the colorants may include without limitation dyes, pigments, and the like, and combinations thereof. Examples of the ultraviolet (UV) blocking agents may include without limitation titanium oxide (TiO₂), carbon black, and the like, and combinations thereof. Examples of the filler may include without limitation glass fiber, carbon fiber, silica, mica, alumina, clay, calcium carbonate, calcium sulfate, glass beads, and the like, and combinations thereof. When the fillers are added, properties such as mechanical strength, heat resistance, and the like may be improved. Examples of the nucleating agents may include without limitation talc, clay, and the like, and combinations thereof.

The additive may be included in a predetermined amount as long as it does not deteriorate the properities of a natural fiber-reinforced polylactic acid resin composition. In one embodiment, the additive may be included in an amount of about 40 parts by weight or less based on about 100 parts by weight of the natural fiber-reinforced polylactic acid resin composition. In another embodiment, the additive may be included in an amount of about 0.1 to about 20 parts by weight based on about 100 parts by weight of the natural fiber-reinforced polylactic acid resin composition.

The natural fiber-reinforced polylactic acid resin composition may further include a thermoplastic resin.

Examples of the thermoplastic resin may include without limitation polycarbonate resin, polyolefin-based resin, polyester-based resin, nylon-based resin, rubber-modified vinyl-based graft copolymer resin, polyacetal, polymethylmethacrylate, and the like, and combinations thereof.

The polycarbonate resin may include one produced by reacting dihydric phenol with phosgene in the presence of molecular weight regulator and a catalyst; or one produced by performing an ester-interchange reaction between dihydric phenol and a carbonate precursor. During the preparation of the polycarbonate resin, a multi-functional aromatic compound, a difunctional carboxylic acid, and the like may be further added. The dihydric phenol can be, for example, 2,2-bis(4-hydroxyphenyl)propane (bisphenol A).

The rubber-modified vinyl-based graft copolymer resin may include one produced by graft copolymerizing styrene, acrylonitrile, and optionally a (meth)acrylic acid alkyl ester monomer to a butadiene rubber, an acryl rubber, a styrene/butadiene rubber, or a combination thereof. Alternatively, the rubber-modified vinyl-based graft copolymer resin may include one produced by graft copolymerizing a monomer of (meth)acrylic acid alkyl ester to a butadiene rubber, an acryl rubber, a styrene/butadiene rubber, or a combination thereof, and in one embodiment, it may include an ABS (acrylonitrile-butadiene-styrene) graft copolymer.

The natural fiber-reinforced polylactic acid resin composition may be included in an amount of about 10 to about 90 wt% and in one embodiment, in an amount of about 30 to about 70 wt% based on the total amount of a mixture of the natural fiber-reinforced polylactic acid resin composition and the thermoplastic resin. When the natural fiber-reinforced polylactic acid resin composition is included within the above range, the thermoplastic resin can have good characteristics and be environmentally-friendly.

As described above, in the natural fiber-reinforced polylactic acid resin composition according to one embodiment, the first polylactic acid resin and the second polylactic acid resin can be different isomers. Therefore, when a stereocomplex is formed, crystallinity (X_{c}) of the natural fiber-reinforced polylactic acid resin composition may increase to about 30 J/g or more. The crystallinity is calculated from a total amount of ΔH_{L} (crystal peak of a L-polylactic acid resin) that is the calories corresponding to a melting point at about 140 to about 170°C and ΔH_{sc} (crystal peak of a stereocomplex) that is the calories corresponding to a melting point at about 195 to about 250°C while increasing the temperature to about 250°C at a rate of about 10°C/min by using differential scanning calorimetry (DSC).

The natural fiber-reinforced polylactic acid resin composition may have a stereocomplex ratio (R_{sc/L}) of more than about 0%, and in one embodiment about 30% or more. The stereocomplex ratio (R_{sc/L}) of more than about 0% refers to a formation of a stereocomplex. The stereocomplex ratio is a stereocomplex crystal ratio of the total crystallinity, and may be calculated from the following equation: ΔH_{sc/}(ΔH_{sc} + ΔH_{L})×100.

In one embodiment, when the natural fiber-reinforced polylactic acid resin composition is quenched using liquid nitrogen from the temperature of about 240°C to the crystallization temperature, and then, observed under isothermal conditions, the spherulite crystal is formed earlier and grows faster on the surface of the natural fiber than in any other place in the composition (like the matrix). The spherulite crystal is a spherical polycrystal including several crystals arranged radially from one spot.

The crystallization temperature may be predetermined using differential scanning calorimetry (DSC), and it may be about 100 to about 180°C. In one embodiment, when the stereocomplex is formed by different isomers of the first and second polylactic acid resins, the crystallization temperature may be about 140 to about 180°C. The spherulite crystal observed is a stereocomplex spherulite crystal. When the first polylactic acid resin and the second polylactic acid resin include the same isomers, the crystallization temperature may be about 100 to about 110°C.

The growth rate of the spherulite crystal is the time measured for the spherulite crystal particle size to grow to 5 µm. It takes about 9 seconds on the surface of the natural fiber, and about 1 minute 12 seconds on the matrix.

As described above, the spherulite crystal on the surface of natural fiber may be a main factor for determing surface-treatment of the natural fiber.

The natural fiber-reinforced polylactic acid resin composition may be prepared by a known method for preparing a resin composition. For example, the components (A) and (B) described herein and optionally one or more additives can be simultaneously mixed and melt-extruded through an extruder to provide a pellet.

According to another embodiment, a molded product made using the above natural fiber reinforced polylactic acid resin composition is provided.

The natural fiber reinforced polylactic acid resin composition may be used to produce a molded product requiring good mechanical strength and heat resistance, for example for automobile parts, machine parts, electronic parts, office machines such as computers, and miscellaneous parts. In particular, it can be used for housings for electronics such as television, computers, printers, washing machines, cassette players, audio equipment, game devices, and the like.

The following examples illustrate the present invention in more detail. However, they are exemplary embodiments and are not limiting.

### [Examples]

A natural fiber-reinforced polylactic acid resin composition according to an embodiment included the following components.

### (1) Polylactic acid resin

4032D manufactured by USA NatureWorks LLC is used as an L-polylactic acid resin. D,D-lactide manufactured by Purac Co. is polymerized to provide a D-polylactic acid resin having a weight average molecular weight of 50,000 g/mol.

### (2) Natural fiber

The natural fiber is made from hemp, and includes a cellulose component in an amount of 98 wt%, an average length of 5 mm, and an average diameter of 10 µm. The natural fiber is surface-treated according to the following Preparation Examples 1 to 5.

### ① Preparation Example 1

A master batch is prepared by adding dried hemp to a reactor and then ring-opening polymerizing the D,D-lactide monomer manufactured by Purac Co..
During the ring-opening polymerization, the hemp and D,D-lactide monomer are mixed in a batch-type mixer at 180°C for 5 minutes, and extruded by a twin-screw extruder connected with the mixer to provide pellets. The D,D-lactide monomer and the hemp are used in an amount to provide a 1:1 weight ratio in the final dipping product.

The catalyst for polymerization included Sn(Oct)₂) and triphenylphosphine in the same mole ratio. The D-polylactic acid resin obtained from adding the D,D-lactide monomer in an amount of 500 mol based on 1 mol of the catalyst and the natural fiber are included in a weight ratio of 1:1 in a dipping product.
Vacuum drying is performed at 100°C to remove non-reacted monomers from the mixture of the polymer, the monomer, and the natural fiber.

### ② Preparation Example 2

A master batch is prepared by adding a D-polylactic acid resin and natural fiber at a weight ratio of 1:1 into a batch-type mixer and then melt-mixing.

### ③ Preparation Example 3

The natural fiber is dipped in the D-polylactic acid resin so that the surface of the natural fiber is soaked with the D-polylactic acid resin in a 1:1 weight ratio using a continuous dipping apparatus.

A natural fiber roving having a filament fiber type is dipped into the D-polylactic acid fusion resin and transmitted linearly to obtain a natural fiber that is surface-treated with the D-polylactic acid resin. The natural fiber is prepared into about 3 to 50 mm pellets.

### (3) Impact-reinforcing agent

223-A of a methylmethacrylate-butadiene ethylacrylate copolymer (Mitsubishi rayon) is used as an impact-reinforcing agent.

### Example 1

60 wt% of the first polylactic acid resin (L-polylactic acid resin) and 40 wt% of the natural fiber surface-treated with the second polylactic acid resin (D-polylactic acid resin) according to Preparation Example 1 are dried at 80°C under a vacuum condition for 4 hours and extruded by a twin-screw extruder at a temperature of about 180°C to provide pellets.

### Example 2

A polylactic acid resin composition is prepared according to the same method as in Example 1, except for using 80 wt% of the first polylactic acid resin (L- polylactic acid resin) and 20 wt% of a natural fiber surface-treated with the second polylactic acid resin (D-polylactic acid resin) according to Preparation Example 1, instead of using 60 wt% of the first polylactic acid resin (L-polylactic acid resin) and 40 wt% of the natural fiber surface-treated with second polylactic acid resin (D-polylactic acid resin) according to Preparation Example 1.

### Example 3

A polylactic acid resin composition is prepared according to the same method as in Example 1, except for using a natural fiber surface-treated with the second polylactic acid resin (D-polylactic acid resin) according to Preparation Example 2, instead of using the natural fiber surface-treated with second polylactic acid resin (D-polylactic acid resin) according to Preparation Example 1.

### Example 4

A polylactic acid resin composition is prepared according to the same method as in Example 1, except for using a natural fiber surface-treated with the second polylactic acid resin (D-polylactic acid resin) according to Preparation Example 3, instead of using the natural fiber surface-treated with second polylactic acid resin (D-polylactic acid resin) according to Preparation Example 1.

### Example 5

A polylactic acid resin composition is prepared according to the same method as in Example 1, adding an impact-reinforcing agent in Example 1. 5 parts by weight of the impact-reinforcing agent is added based on 100 parts by weight of the natural fiber that is surface-treated with the second polylactic acid resin and the first polylactic acid resin.

### Comparative Example 1

A polylactic acid resin composition is prepared according to the same method as in Example 1, except for adding 60 wt% of the first polylactic acid resin (L-polylactic acid resin), 20 wt% of the second polylactic acid resin (D-polylactic acid resin), and 20 wt% of the natural fiber without surface-treatment.

### Comparative Example 2

A polylactic acid resin composition is prepared according to the same method as in Example 1, except for adding 80 wt% of the first polylactic acid resin (L-polylactic acid resin) and 20 wt% of the natural fiber without surface-treatment.

### [Experimental Examples]

The pellets prepared according to Examples 1 to 5 and Comparative Examples 1 and 2 are dried at 80°C for 4 hours or more and then prepared as an ASTM dumbbell specimen by using an 6 oz injection molding machine set at a cylinder temperature of 230°C, a molding temperature of 80°C, and a molding cycle of 60. The properties of prepared specimens are evaluated according to the following methods. The results are provided in the following Table 1.
1) Thermal distortion temperature (HDT): measured based on ASTM D648.
2) Tensile strength: measured based on ASTM D638.
3) Flexural strength: measured based on ASTM D790.
4) Flexural modulus: measured based on ASTM D790.
5) IZOD Impact strength: measured based on ASTM D256 (specimen thickness 1/4").
6) ΔH_{L}: calories corresponding to a melting point peak of a L-polylactic acid crystal observed at about 140 to about 170°C.
7) T_{L}: temperature where a H_{L} peak is shown.
8) ΔH_{sc}: calories corresponding to a melting point peak of a stereocomplex crystal observed at about 195 to about 250°C.
9) T_{sc}: temperature where an ΔH_{sc} peak is shown.
10) Crystallinity (X_{c}): After obtaining at least 5 mg of the core of each specimen, the crystallinity is calculated from a total amount of ΔH_{L} (crystal peak of a L-polylactic acid resin) that is calories corresponding to a melting point at about 140 to about 170°C and ΔH_{sc} (crystal peak of a stereocomplex) that is calories corresponding to a melting point at about 195 to about 250°C while increasing the temperature to about 250°C at a rate of about 10°C/min by using a differential scanning calorimeter (DSC) manufactured by TA Instrument Co.
11) Stereocomplex ratio (R_{sc/L}): stereocomplex crystal ratio amount of the total crystal which is calculated from the following equation: ΔH_{sc}/(ΔH_{sc}+ ΔH_{L})×100.
12) Confirmation existence of spherulite crystal on the surface of the natural fiber: The spherulite crystal on the surface of natural fiber may be a main factor for determing surface-treatment of the natural fiber in Examples 1 to 5 and Comparative Examples 1 and 2. When the natural fiber-reinforced polylactic acid resin composition is quenched using liquid nitrogen from a temperature of 240°C to the crystallization temperature (predetermined using differential scanning calorimetry (DSC), and is about 150°C), and then, observed using a polarizing microscope under an isothermal condition, rapid growth of a spherulite crystal on the surface of the natural fiber indicates that the natural fiber is dipped in a polylactic acid resin.

Growth of a stereocomplex spherulite crystal is observed on the surface of the natural fiber: ○

Growth of a stereocomplex spherulite crystal is not observed on the surface of the natural fiber: X

After the specimen prepared according to Example 2 is quenched using liquid nitrogen from the temperature of about 240°C to about 140°C, the spherulite crystal is observed. It took about 9 seconds on the surface of the natural fiber and about 1 minute 12 seconds on the matrix to grow the spherulite crystal to 5 µm.

**Table 1**

| | | unit | Example | | | | | Comparative Example | |
|---|---|---|---|---|---|---|---|---|---|
| | | | 1 | 2 | 3 | 4 | 5 | 1 | 2 |
| (A) First polylactic acid resin (L-polylactic acid resin) | | wt% | 60 | 80 | 60 | 60 | 60 | 60 | 80 |
| (B) Natural fiber surface-treated with the second polylactic acid resin | Preparation Example 1 | wt% | 40 | 20 | - | - | 40 | - | - |
| | Preparation Example 2 | wt% | - | - | 40 | - | - | - | - |
| | Preparation Example 3 | wt% | - | - | - | 40 | - | - | - |
| (C) Impact-reinforcing agent | | parts by weight* | - | - | - | - | 5 | - | - |
| Second polylactic acid | | wt% | - | - | - | - | - | 20 | - |
| resin (D-polylactic acid resin) | | | | | | | | | |
| Natural fiber | | wt% | - | - | - | - | - | 20 | 20 |
| Thermal distortion tem-perature | | °C | 115 | 98 | 93 | 95 | 109 | 80 | 63 |
| Tensile strength | | kgf/cm² | 1020 | 950 | 750 | 800 | 1000 | 690 | 610 |
| Flexural strength | | kgf/cm² | 1320 | 1023 | 970 | 990 | 1210 | 850 | 790 |
| Flexural modulus | | kgf/cm² | 41530 | 39450 | 36870 | 37840 | 4001 0 | 33410 | 30120 |
| Impact strength | | kgf cm/cm | 9.8 | 8.5 | 6.4 | 7.2 | 12.2 | 2.2 | 1.2 |
| Δ H_{L} | | J/g | 19 | 28 | 20 | 20.4 | 20 | 13 | 9 |
| T_{L} | | °C | 164.3 | 165.7 | 164.8 | 165 | 164.0 | 163 | 162 |
| ΔH_{sc} | | J/g | 15 | 5 | 14 | 21 | 15 | 17 | 0 |
| T_{sc} | | °C | 222.5 | 216.0 | 221.9 | 221.6 | 222.0 | 218 | 0 |
| X_{c} | | J/g | 34 | 33 | 34 | 41.4 | 35 | 30 | 9 |
| R_{sc/L} | | % | 44 | 15 | 41 | 51 | 43 | 57 | 0 |
| Existence of spherulite crystal on the surface of the natural fiber | | - | ○ | ○ | ○ | ○ | ○ | X | X |

| | | | | | | | | | |
|---|---|---|---|---|---|---|---|---|---|
| * parts by weight: denotes a content unit represented based on 100 parts by weight of the first polylactic acid resin (A) and the natural fiber surface-treated with the second polylactic acid resin (B). | | | | | | | | | |

As shown in the Table 1, Examples 1 to 5 including a natural fiber surface-treated with a polylactic acid resin exhibit an excellent balance of physical properties such as heat resistance, Impact strength, and mechanical properties compared to Comparative Examples 1 and 2 including a natural fiber that is not surface-treated and in which a polylactic acid resin is added separately.

Examples 1 to 5 using the L-polylactic acid resin as the first polylactic acid resin and the D-polylactic acid resin as the second polylactic acid resin show excellent properties because the L-polylactic acid resin that exists in the matrix and D-polylactic acid resin that exists on the natural fiber form a stereocomplex, and thereby, crystallization near the stereocomplex is promoted.

In contrast, Comparative Example 1 using the L-polylactic acid resin as the first polylactic acid resin and the D-polylactic acid resin as the second polylactic acid resin and mixing them with a natural fiber that is not surface-treated exhibits deteriorated heat resistance, impact strength and mechanical strength indicating that crystallinity decreases. Comparative Example 2 using the L-polylactic acid resin and the natural fiber that is not surface-treated exhibits deteriorated heat resistance, impact strength, and mechanical strength.

Examples 1 and 2 prepared according to Preparation Example 1 adding the D-polylactic acid resin by in-situ synthesis on the natural fiber surface exhibits excellent heat resistance, impact strength, and mechanical properties compared with Example 3 prepared according to Preparation Example 2 by melt-mixing using a batch-type mixer and Example 4 prepared according to Preparation Example 3 by dipping using a continuous dipping apparatus.

Example 4 shows more improved properties than Example 3 because the natural fiber may be dispersed more effectively in a resin by dipping using a continuous dipping apparatus than melt-mixing using a batch-type mixer.

Examples 1 to 4 including the surface-treated natural fiber showed similar crystallinity and stereocomplex ratios, but Examples 1 and 2 using the chemical dipping method by polymerization had much better heat resistance, impact strength, and mechanical properties than Examples 3 and 4 using the simple physical dipping method. In the physical dipping method, D-polylactic acid may be separated easily from the natural fiber during a compounding process, but in the chemical dipping method, a stereocomplex is formed on the surface of the natural fiber, and therefore adhesive strength between a resin and a natural fiber may be improved.

Generally, as more natural fiber is added, the impact strength may be deteriorated. However, Example 1 including more natural fiber than Example 2 has higher impact strength than Example 2. The results indicate that the crystal structure of the natural fiber supports the natural fiber and improves properties.

Many modifications and other embodiments of the invention will come to mind to one skilled in the art to which this invention pertains having the benefit of the teachings presented in the foregoing description. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

This application claims priority to Korean Patent Application Nos. 10-2008-0114242 and 10-2009-0109968 filed on November 17, 2008 and November 13, 2009, respectively .

## Claims

1. A natural fiber-reinforced polylactic acid resin composition comprising:
(A) 50 to 95 wt% of a first polylactic acid resin; and
(B) 5 to 50 wt% of a natural fiber that is surface-treated with a second polylactic acid resin,
wherein the second polylactic acid resin includes a different isomer from the first polylactic acid resin.

2. A natural fiber-reinforced polylactic acid resin composition comprising:
(A) 50 to 95 wt% of a first polylactic acid resin; and
(B) 5 to 50 wt% of a natural fiber that is surface-treated with a second polylactic acid resin,
wherein a spherulite crystal is first formed at a surface of the natural fiber and the growth rate of the spherulite crystal at the surface of the natural fiber is faster than that the growth rate of the spherulite crystal at other positions in the composition when measured under isothermal conditions after quenching from 240°C to a crystallization temperature.

3. The natural fiber-reinforced polylactic acid resin composition of claim 2, wherein the crystallization temperature ranges from 100 to 180°C.

4. The natural fiber-reinforced polylactic acid resin composition of claim 2, wherein the spherulite crystal is a stereocomplex spherulite crystal, and the crystallization temperature ranges from 140 to 180°C.

5. The natural fiber-reinforced polylactic acid resin composition of any of claims 1 to 4, wherein the first polylactic acid resin and the second polylactic acid resin each independently comprise an L-polylactic acid (PLLA) resin, a D-polylactic acid (PDLA) resin, an L,D-polylactic acid resin, or a combination thereof.

6. The natural fiber-reinforced polylactic acid resin composition of claim 5, wherein the L-polylactic acid resin includes 95 wt% or more of a repeating unit derived from an L-lactic acid, and the D-polylactic acid resin includes 95 wt% or more of a repeating unit derived from D-lactic acid.

7. The natural fiber-reinforced polylactic acid resin composition of any of claims 1 to 6, wherein the natural fiber that is surface-treated with the second polylactic acid resin is obtained by in-situ synthesis of the second polylactic acid resin on the surface of the natural fiber.

8. The natural fiber-reinforced polylactic acid resin composition of any of claims 1 to 7, wherein the natural fiber that is surface-treated with the second polylactic acid resin is obtained by melt-mixing the second polylactic acid resin and the natural fiber using a batch-type mixer.

9. The natural fiber-reinforced polylactic acid resin composition of any of claims 1 to 8, wherein the natural fiber that is surface-treated with the second polylactic acid resin is obtained by dipping the natural fiber in the second polylactic acid resin so that the surface of the natural fiber is soaked with the second polylactic acid resin using a continuous dipping apparatus.

10. The natural fiber-reinforced polylactic acid resin composition of any of claims 1 to 9, wherein the natural fiber surface-treated with the second polylactic acid resin (B) comprises the second polylactic acid resin and the natural fiber at a weight ratio of 1:0.1 to 1:10.

11. The natural fiber-reinforced polylactic acid resin composition of any of claims 1 to 10, wherein the natural fiber comprises a bast fiber.

12. The natural fiber-reinforced polylactic acid resin composition of any of claims 1 to 11, wherein the natural fiber comprises 70 wt% or more of cellulose.

13. The natural fiber-reinforced polylactic acid resin composition of any of claims 1 to 12, wherein the natural fiber has an average length of 0.01 to 100 mm.

14. The natural fiber-reinforced polylactic acid resin composition of any of claims 1 to 13, wherein the natural fiber has an average diameter of 0.001 to 50 µm.

15. The natural fiber-reinforced polylactic acid resin composition of any of claims 1 to 14, wherein the natural fiber-reinforced polylactic acid resin composition further comprises 0.01 to 30 parts by weight of an impact-reinforcing agent based on 100 parts by weight of the natural fiber-reinforced polylactic acid resin composition.

16. The natural fiber-reinforced polylactic acid resin composition of claim 15, wherein the impact-reinforcing agent comprises a reactive olefin-based copolymer obtained by grafting a reactive group comprising maleic anhydride, glycidyl methacrylate, oxazoline, or a combination thereof onto an olefin-based rubber, a core-shell copolymer obtained by grafting an unsaturated compound onto a rubber polymer; or a combination thereof.

17. The natural fiber-reinforced polylactic acid resin composition of any of claims 1 to 16, wherein the natural fiber-reinforced polylactic acid resin composition further comprises a thermoplastic resin comprising a polycarbonate resin, a polyolefin-based resin, a polyester-based resin, a nylon-based resin, a rubber modified vinyl-based graft copolymer resin, polyacetal, polymethylmethacrylate, or a combination thereof.

18. The natural fiber-reinforced polylactic acid resin composition of any of claims 1 to 17, wherein the natural fiber-reinforced polylactic acid resin composition may further include an additive selected from the group consisting of an anti-hydrolysis agent, a flame retardant, a flame-retardant aid, an organic or inorganic reinforcing agent, an antibacterial agent, a heat stabilizer, an antioxidant, a release agent, a light stabilizer, a compatibilizer, an inorganic material additive, a surfactant, a coupling agent, a plasticizer, an admixture, a stabilizer, a lubricant, an antistatic agent, a flame proofing agent, a weather-resistance agent, a colorant, an ultraviolet blocking agent, a filler, a nucleating agent, an adhesion aid, an adhesive, and a mixture thereof.

19. A molded product obtainable from the natural fiber-reinforced polylactic acid resin composition according to claim 1 or 2.

## Patentansprüche

1. Natürliche faserverstärkte Polymilchsäureharzzusammensetzung, umfassend:
(A) 50 bis 95 Gew.-% eines ersten Polymilchsäureharzes; und
(B) 5 bis 50 Gew.-% einer Naturfaser, die mit einem zweiten Polymilchsäureharz oberflächenbehandelt ist,
wobei das zweite Polymilchsäureharz ein anderes Isomer als das erste Polymilchsäureharz einschließt

2. Natürliche faserverstärkte Polymilchsäureharzzusammensetzung, umfassend:
(A) 50 bis 95 Gew.-% eines ersten Polymilchsäureharzes; und
(B) 5 bis 50 Gew.-% einer natürlichen Faser, die mit einem zweiten Polymilchsäureharz oberflächenbehandelt ist,
wobei an einer Oberfläche der Naturfaser zuerst ein Sphärulitkristall gebildet wird, und die Wachstumsgeschwindigkeit des Sphärulitkristalls an der Oberfläche der Naturfaser schneller ist als die Wachstumsgeschwindigkeit des Sphärulitkristalls an anderen Positionen in der Zusammensetzung, gemessen unter isothermen Bedingungen nach Abkühlen von 240°C auf eine Kristallisationstemperatur.

3. Naturfaserverstärkte Polymilchsäureharzzusammensetzung nach Anspruch 2, wobei die Kristallisationstemperatur im Bereich von 100 bis 180°C liegt.

4. Naturfaserverstärkte Polymilchsäureharzzusammensetzung nach Anspruch 2, wobei der Sphärulitkristall ein stereokomplexer Sphärulitkristall ist und die Kristallisationstemperatur im Bereich von 140 bis 180°C liegt.

5. Naturfaserverstärkte Polymilchsäureharzzusamnensetzung nach einem der Ansprüche 1 bis 4, wobei das erste Polymilchsäureharz und das zweite Polymilchsäureharz jeweils unabhängig ein L-Polymilchsäure- (PLLA-) -Harz, ein D-Polymilchsäure-(PDLA-) -Harz, ein L,D-Polymilchsäureharz oder eine Kombination davon umfassen.

6. Naturfaserverstärkte Polymilchsäureharzzusammensetzung nach Anspruch 5, wobei das L-Polymilchsäureharz 95 Gew.-% oder mehr einer von L-Milchsäure abgeleiteten Wiederholungseinheit einschließt und das D-Polymilchsäureharz 95 Gew.-% oder mehr einer von D-Milchsäure abgeleiteten Wiederholungseinheit einschließt.

7. Naturfaserverstärkte Polymilchsäureharzzusammensetzung nach einem der Ansprüche 1 bis 6, wobei die mit dem zweiten Polymilchsäureharz oberflächenbehandelte Naturfaser durch in-situ-Synthese des zweiten Polymilchsäureharzes auf der Oberfläche der Naturfaser erhalten wird.

8. Naturfaserverstärkte Polymilchsäureharzzusammensetzung nach einem der Ansprüche 1 bis 7, wobei die mit dem zweiten Polymilchsäureharz oberflächenbehandelte Naturfaser durch Schmelzmischen des zweiten Polymilchsäureharzes und der Naturfaser unter Verwendung eines Chargenmischers erhalten wird.

9. Naturfaserverstärkte Polymilchsäureharzzusammensetzung nach einem der Ansprüche 1 bis 8, wobei die mit dem zweiten Polymilchsäureharz oberflächenbehandelte Naturfaser unter Verwendung einer Tauchapparatur durch derartiges Eintauchen der Naturfaser in das zweite Polymilchsäureharz erhalten wird, dass die Oberfläche der Naturfaser mit dem zweiten Polymilchsäureharz durchtränkt wird.

10. Naturfaserverstärkte Polymilchsäureharzzusammensetzung nach einem der Ansprüche 1 bis 9, wobei die mit dem zweiten Polymilchsäureharz oberflächenbehandelte Naturfaser (B) das zweite Polymilchsäureharz umfasst und die Naturfaser ein Gewichtsverhältnis von 1:0,1 bis 1:10 aufweist.

11. Naturfaserverstärkte Polymilchsäureharzzusammensetzung nach einem der Ansprüche 1 bis 10, wobei die Naturfaser eine Bastfaser umfasst.

12. Naturfaserverstärkte Polymilchsäureharzzusammensetzung nach einem der Ansprüche 1 bis 11, wobei die Naturfaser 70 Gew.-% oder Mehr Cellulose umfasst.

13. Naturfaserverstärkte Polymilchsäureharzzusammensetzung nach einem der Ansprüche 1 bis 12, wobei die Naturfaser eine mittlere Länge von 0,01 bis 100 mm aufweist.

14. Naturfaserverstärkte Polymilchsäureharzzusammensetzung nach einem der Ansprüche 1 bis 13, wobei die Naturfaser einen mittleren Durchmesser von 0,001 bis 50 µm aufweist.

15. Naturfaserverstärkte Polymilchsäureharzzusammensetzung nach einem der Ansprüche 1 bis 14, wobei die naturfaserverstärkte Polymilchsäureharzzusammensetzung des Weiteren 0,01 bis 30 Gewichtsteile eines schlagverstärkenden Mittels auf der Basis von 100 Gewichtsteilen der naturfaserverstärkten Polymilchsäureharzzusammensetzung umfasst.

16. Naturfaserverstärkte Polymilchsäureharzzusammensetzung nach Anspruch 15, wobei das schlagverstärkende Mittel ein auf reaktivem Olefin basierendes Copolymer, das durch Pfropfen einer reaktiven Gruppe, umfassend Maleinsäureanhydrid, Glycidylmethacrylat, Oxazolin oder eine Kombination davon, auf einen auf Olefin basierenden Kautschuk erhalten wird, ein Kern-Schale-Copolymer, das durch Pfropfen einer ungesättigten Verbindung auf ein Kautschukpolymer erhalten wird, oder eine Kombination davon umfasst.

17. Naturfaserverstärkte Polymilchsäureharzzusammensetzung nach einem der Ansprüche 1 bis 16, wobei die naturfaserverstärkte Polymilchsäureharzzusammensetzung des Weiteren ein thermoplastisches Harz umfasst, das ein Polycarbonatharz, ein auf Polyolefin basierendes Harz, ein auf Polyester basierendes Harz, ein auf Nylon basierendes Harz, ein kautschukmodifiziertes auf Vinyl basierendes Pfropfcopolymerharz, Polyacetal, Polymethylmethacrylat oder eine Kombination davon umfasst.

18. Naturfaserverstärkte Polymilchsäureharzzusammensetzung nach einem der Ansprüche 1 bis 17, wobei die naturfaserverstärkte Polymilchsäureharzzusammensetzung des Weiteren einen Zusatz einschließen kann, der ausgewählt ist aus der Gruppe, bestehend aus einem Antihydrolysemittel, einem Flammhemmer, einer Flammhemmerhilfe, einem organischen oder anorganischen Verstärkungsmittel, einem antibakteriellen Mittel, einem Wärmestabilisator, einem Antioxidationsmittel, einem Trennmittel, einem Lichtstabilisator, einem Verträglichmacher, einem Additiv aus anorganischem Material, einem oberflächenaktiven Mittel, einem Kupplungsmittel, einem Weichmacher, einer Beimischung, einem Stabilisator, einem Schmiermittel, einem Antistatikmittel, einem Flammschutzmittel, einem Wetterfestigkeitsmittel, einem Farbmittel, einem Ultraviolettblocker, einem Füllstoff, einem Keimbildner, einer Hafthilfe, einem Klebstoff und einem Gemisch davon.

19. Formprodukt, das aus der naturfaserverstärkten Polymilchsäureharzzusammensetzung nach Anspruch 1 oder 2 erhältlich ist.

## Revendications

1. Composition de résine de poly(acide lactique) renforcée par des fibres naturelles, comprenant :
(A) 50 à 95 % en poids d'une première résine de poly(acide lactique) ; et
(B) 5 à 50 % en poids d'une fibre naturelle qui a subi un traitement superficiel avec une deuxième résine de poly(acide lactique),
la deuxième résine de poly(acide lactique) comprenant un isomère différent de la première résine de poly(acide lactique).

2. Composition de résine de poly(acide lactique) renforcée par des fibres naturelles, comprenant :
(A) 50 à 95 % en poids d'une première résine de poly(acide lactique) ; et
(B) 5 à 50 % en poids d'une fibre naturelle qui a subi un traitement superficiel avec une deuxième résine de poly(acide lactique),
un cristal sphérolitique étant formé d'abord sur une surface de la fibre naturelle, et la vitesse de croissance du cristal sphérolitique sur la surface de la fibre naturelle étant supérieure à la vitesse de croissance du cristal sphérolitique sur d'autres positions de la composition quand la mesure est effectuée dans des conditions isothermes après refroidissement, de 240°C à une température de cristallisation.

3. Composition de résine de poly(acide lactique) renforcée par des fibres naturelles selon la revendication 2, dans laquelle la température de cristallisation est comprise dans la plage de 100 à 180°C.

4. Composition de résine de poly(acide lactique) renforcée par des fibres naturelles selon la revendication 2, dans laquelle le complexe sphérolitique est un cristal sphérolitique stéréocomplexe, et la température de cristallisation est comprise dans la plage de 140 à 180°C.

5. Composition de résine de poly(acide lactique) renforcée par des fibres naturelles selon l'une quelconque des revendications 1 à 4, dans laquelle la première résine de poly(acide lactique) et la deuxième résine de poly(acide lactique) comprennent chacune indépendamment de l'autre une résine de poly(acide L-lactique) (PLLA), une résine de poly(acide D-lactique) (PDLA), une résine de poly(acide L,D-lactique) ou une combinaison de celles-ci.

6. Composition de résine de poly(acide lactique) renforcée par des fibres naturelles selon la revendication 5, dans laquelle la résine de poly(acide L-lactique) comprend 95 % en poids ou plus d'un motif répétitif qui dérive d'un acide L-lactique, et la résine de poly(acide D-lactique) comprend 95 % en poids ou plus d'un motif répétitif qui dérive de l'acide D-lactique.

7. Composition de résine de poly(acide lactique) renforcée par des fibres naturelles selon l'une quelconque des revendications 1 à 6, dans laquelle la fibre naturelle qui a subi un traitement superficiel avec la deuxième résine de poly(acide lactique) est obtenue par synthèse in situ de la deuxième résine de poly(acide lactique) sur la surface de la fibre naturelle.

8. Composition de résine de poly(acide lactique) renforcée par des fibres naturelles selon l'une quelconque des revendications 1 à 7, dans laquelle la fibre naturelle qui a subi un traitement superficiel avec la deuxième résine de poly(acide lactique) est obtenue par mélange à l'état fondu de la deuxième résine de poly(acide lactique) et de la fibre naturelle par utilisation d'un mélangeur de type discontinu.

9. Composition de résine de poly(acide lactique) renforcée par des fibres naturelles selon l'une quelconque des revendications 1 à 8, dans laquelle la fibre naturelle qui a subi un traitement superficiel avec la deuxième résine de poly(acide lactique) est obtenue par immersion de la fibre naturelle dans la deuxième résine de poly(acide lactique) de telle sorte que la surface de la fibre naturelle soit imprégnée de la deuxième résine de poly(acide lactique) par utilisation d'un appareil d'immersion en continu.

10. Composition de résine de poly(acide lactique) renforcée par des fibres naturelles selon l'une quelconque des revendications 1 à 9, dans laquelle la fibre naturelle ayant subi un traitement superficiel avec la deuxième résine de poly(acide lactique) (B) comprend la deuxième résine de poly(acide lactique) et la fibre naturelle selon un rapport en poids de 1:0,1 à 1:10.

11. Composition de résine de poly(acide lactique) renforcée par des fibres naturelles selon l'une quelconque des revendications 1 à 10, dans laquelle la fibre naturelle comprend une fibre libérienne.

12. Composition de résine de poly(acide lactique) renforcée par des fibres naturelles selon l'une quelconque des revendications 1 à 11, dans laquelle la fibre naturelle comprend 70 % en poids ou plus de cellulose.

13. Composition de résine de poly(acide lactique) renforcée par des fibres naturelles selon l'une quelconque des revendications 1 à 12, dans laquelle la fibre naturelle a une longueur moyenne de 0,01 à 100 mm.

14. Composition de résine de poly(acide lactique) renforcée par des fibres naturelles selon l'une quelconque des revendications 1 à 13, dans laquelle la fibre naturelle a un diamètre moyen de 0,001 à 50 µm.

15. Composition de résine de poly(acide lactique) renforcée par des fibres naturelles selon l'une quelconque des revendications 1 à 14, la composition de résine de poly(acide lactique) renforcée par des fibres naturelles comprenant en outre 0,01 à 30 parties en poids d'un agent augmentant la résistance au choc, pour 100 parties en poids de la composition de résine de poly(acide lactique) renforcée par des fibres naturelles.

16. Composition de résine de poly(acide lactique) renforcée par des fibres naturelles selon la revendication 15, dans laquelle l'agent augmentant la résistance au choc comprend un copolymère à base d'une oléfine réactive, obtenu par greffage d'un groupe réactif comprenant de l'anhydride maléique, du méthacrylate de glycidyle, de l'oxazoline ou une combinaison de ceux-ci, sur un caoutchouc à base oléfinique, un copolymère coeur-coque obtenu par greffage d'un composé insaturé sur un polymère caoutchoutique ; ou une combinaison de ceux-ci.

17. Composition de résine de poly(acide lactique) renforcée par des fibres naturelles selon l'une quelconque des revendications 1 à 16, la composition de résine de poly(acide lactique) renforcée par des fibres naturelles comprenant en outre une résine thermoplastique comprenant une résine de polycarbonate, une résine à base de polyoléfine, une résine à base de polyester, une résine à base de nylon, une résine d'un copolymère greffé à base vinylique modifié par du caoutchouc, un polyacétal, un poly(méthacrylate de méthyle) ou une combinaison de ceux-ci.

18. Composition de résine de poly(acide lactique) renforcée par des fibres naturelles selon l'une quelconque des revendications 1 à 17, la composition de résine de poly(acide lactique) renforcée par des fibres naturelles pouvant comprendre en outre un additif choisi dans le groupe consistant en un agent anti-hydrolyse, un retardateur de flamme, un auxiliaire de retardateur de flamme, un agent de renfort organique ou inorganique, un agent antibactérien, un thermostabilisant, un antioxydant, un agent de démoulage, un photostabilisant, un agent de compatibilisation, un additif constitué d'une matière inorganique, un tensioactif, un agent de couplage, un plastifiant, un adjuvant, un stabilisant, un lubrifiant, un agent antistatique, un agent d'ignifugation, un agent de résistance aux intempéries, une substance colorante, un agent bloquant les ultraviolets, une charge, un agent de nucléation, un auxiliaire d'adhérence, un adhésif et un mélange de ceux-ci.

19. Produit moulé pouvant être obtenu à partir de la composition de résine de poly(acide lactique) renforcée par des fibres naturelles selon la revendication 1 ou 2.
